# EUROPÄISCHE PATENTSCHRIFT

(11) **EP 0 824 376 B1**
(45) Veröffentlichungstag und Bekanntmachung des Hinweises auf die Patenterteilung: **23.06.1999**
(21) Anmeldenummer: 96914068.0
(22) Anmeldetag: 30.04.1996
(51) Int. Cl.: B03C 3/15, B04C 9/00, F01N 3/02

(54) **ZYKLON MIT SPRÜHELEKTRODE**
CYCLONE WITH SPRAY ELECTRODE
SEPARATEUR A CYCLONE MUNI D'UNE ELECTRODE D'EMISSION

(30) Priorität: 08.05.1995 DE 19516817
(43) Veröffentlichungstag der Anmeldung: 25.02.1998
(73) Patentinhaber: UNIVERSITÄT KARLSRUHE, (TECHNISCHE HOCHSCHULE), 76131 Karlsruhe (DE)
(72) Erfinder: WADENPOHL, Christoph, D-53773 Hennef (DE)
(74) Vertreter: Jany, Peter
(86) Internationale Anmeldenummer: DE9600817
(87) Internationale Veröffentlichungsnummer: WO9635512

(56) Entgegenhaltungen:
- DE-C- 858 837
- US-A- 4 352 681
- US-A- 4 587 807

## Beschreibung

Die Erfindung betrifft einen Zyklon und ein Verfahren zum kontinuierlichen Abscheiden feiner Partikel aus einem Gasstrom, insbesondere von Ruß aus dem Abgas von Brennkraftmaschinen, gemäß dem Oberbegriff der Ansprüche 1 bzw. 13 (siehe DE-C-858 837). Ein Zyklon ist eine bekannte Vorrichtung, in der mittels Strömungseffekten in einer in dem Zyklon ausgebildeten Drallströmung die Partikel in einem Partikelsammelbereich angereichtert werden. Er umfaßt ein Gehäuse, das einen Eintrittsbereich, in den eine Einströmöffnung mündet, einen im Strömungsweg des Gases stromabwärts von dem Eintrittsbereich angeordneten Abscheidebereich und den im Strömungsweg der Partikel stromabwärts von dem Abscheidebereich angeordneten Partikelsammelbereich einschließt, und weist eine in das Innere des Gehäuses mündende Reingasauslaßöffnung auf.

Der Eintrittsbereich ist derjenige Bereich im Innern des Zyklons, der unmittelbar an die Einströmöffnung anschließt. In dem Einstrombereich und insbesondere in dem Abscheidebereich des Zyklons wird ein mit abzuscheidenden Partikeln versehener Schmutzgasstrom in eine Drallströmung transformiert, in der die Partikel unter dem Einfluß der Zentrifugalkraft an die Wand des Zyklons gelangen, wo sie verlangsamen und in den Partikelsammelbereich absinken oder mit einer Grenzschichtströmung aus dem Partikelsammelbereich ausgetragen werden. Das Reingas verläßt den Zyklon durch die Reingasauslaßöffnung. Die Bereiche des Gehäuses eines Zyklons sind nicht immer scharf in Eintrittsbereich, Abscheidebereich und Partikelsammelbereich unterscheidbar, da sie oft fließend ineinander übergehen. Unter der Reingasauslaßöffnung wird derjenige Innenwandflächenabschnitt des Gehäuseinnenraums verstanden, welcher die Querschnittsfläche umrandet, durch die das Reingas den Gehäuseinnenraum verläßt. In einem Zyklon ohne Tauchrohr ist die Reingasauslaßöffnung der Rand des Loches in dem Gehäuse, durch das das Reingas austritt. Bei Zyklonen mit Tauchrohr ist die Reingasauslaßöffnung das sich im Gehäuseinnenraum befindende Ende des Tauchrohrs.

Ein Zyklon hat anwendungstechnische Vorteile, da er billig herzustellen, robust und bei richtiger Auslegung sehr betriebssicher ist. Darüber hinaus ist er auch bei hohen Temperaturen einsetzbar. Das Abscheidevermögen eines einfachen Zyklons ist jedoch für Partikel im Größenbereich unterhalb einer bestimmten Trenngrenze in der Regel unzureichend. Das Grenzkorn liegt, je nach Baugröße des Zyklons, zwischen 1 µm und 10 µm. Bei Trenngrenzen in der Nähe von 1 µm wird ein Zyklon als Hochleistungszyklon bezeichnet. Die aus der Drallströmung resultierenden Fliehkräfte sind nur bei größeren Partikeln ausreichend, um eine Abscheidung an der Innenwand des Zyklons herbeizufuhren. Bei sehr feinen Partikeln reichen diese Kräfte jedoch nicht aus, um einen nennenswerten Abscheidegrad zu erzielen.

In vielen Anwendungsfällen ist gerade im Bereich kleiner Partikelgrößen ein großer Teil der abzuscheidenden Partikel angesiedelt. Im Abgas von Dieselmotoren beispielsweise sind etwa 80 % der Partikelmasse Rußteilchen im Größenbereich unterhalb von 1 µm und die mittlere Partikelgröße beträgt etwa 0,1 µm. Zum Einsatz eines Zyklones sind daher in diesem Größenbereich weitere Maßnahmen zu treffen.

Zur Verbesserung der Partikelabscheidung ist es bekannt, zusätzlich elektrische Kräfte einzusetzen. Eine bekannte Realisierung dieser Idee besteht darin, einen Zyklon mit einem vorgeschalteten elektrischen Agglomerator zu kombinieren. In dem vorgeschalteten Agglomerator findet eine Konditionierung der abzuscheidenden Partikel statt, und zwar in der Weise, daß durch eine Agglomeratbildung in dem Agglomerator die mittlere Partikelgröße angehoben und damit in einen Bereich überführt wird, in dem der nachgeschaltete Zyklon einen besseren Abscheidegrad aufweist. Zur Agglomeratbildung werden elektrische Kräfte eingesetzt, und die Agglomeratoren, die auch als Elektroabscheider oder Elektrofilter bezeichnet werden, bestehen im wesentlichen aus einem durchströmten Rohr, in dem eine an eine Hochspannungsquelle angeschlossene Elektrode axial angeordnet ist. Unter dem Einfluß des elektrischen Felds agglomerieren die Partikel in bekannter Weise, so daß die grobkörnigeren Agglomerate im nachfolgenden Zyklon abgeschieden werden können.

Als Voraussetzung für die Anwendung dieses bekannten zweistufigen Verfahrens mit Agglomerator und nachgeschaltetem Zyklon müssen die Partikel eine kleine Primärgröße aufweisen und zur Agglomeration neigen, d.h. elektrisch leitfähig sein. Nicht leitfähige Partikel bilden in dem Agglomerator eine feste Schicht, die nicht mit dem Gasstrom ausgetragen wird, sondern durch einen mechanischen Feststoffaustrag entfernt werden muß.

Eine solche Kombination aus Agglomerator mit nachgeschaltetem Zyklon ist aus der Druckschrift DE 37 32 552 A1 bekannt. Dieses Dokument beschreibt, wie ein von mit abzuscheidenden Partikeln versehener Abgasstrom, insbesondere mit Rußteilchen versehenes Abgas von Dieselbrennkraftmaschinen, zunächst durch einen als Elektrofilter bezeichneten Agglomerator geleitet wird, in dem die Partikel zu größeren Agglomeraten koagulieren bzw. agglomerieren. Das aus dem Agglomerator austretende Gas mit Partikelagglomeraten wird nachgeordneten Zyklonen zugeführt, die in einer besonders platzsparenden Weise ringförmig angeordnet sind.

Auch die Patentschrift DE 32 38 793 C2 betrifft eine solche Kombination aus Agglomerator und nachgeschaltetem Zyklon. In dieser Druckschrift ist eine Besonderheit des vorgeschalteten Agglomerators beschrieben, die darin besteht, daß anstelle des sonst üblichen Sprühdrahts, mit dem sich Zu einer geerdeten Kammerwand hin bewegende Ionen erzeugt werden, die sich auf ihrem Weg an die Partikel anlagern und diese somit aufladen, eine elektrische Feldstärke unterhalb der Ionisationsfeldstärke für die Agglomeratbildung verwendet wird.

Die Patentschrift DE 35 00 373 C2 beschreibt eine Vorrichtung zum Entfernen von Partikeln, insbesondere von Rußteilchen aus dem Abgas von Brennkraftmaschinen, mit einem Elektroabscheider, der mit Sprühelementen versehene Sprühelektroden aufweist, und einem nachgeordneten Fliehkraftabscheider. Die Besonderheit besteht darin, daß der Fliehkraftabscheider aus einer Vielzahl von sich koaxial an den Elektroabscheider anschließenden Zyklonen gebildet ist, die ringförmig an die Austrittsseite des Elektroabscheiders angeordnet sind.

Die bekannten Kombinationsschaltungen aus Agglomerator und nachgeschaltetem Zyklon weisen, insbesondere bei feinen Partikeln, einen noch nicht zufriedenstellenden Abscheidegrad auf, das Bauvolumen ist relativ groß und der Druckverlust im Gasstrom ist beträchtlich. Zudem ist ein hoher konstruktiver Aufwand bei der Herstellung erforderlich.

Zur Verbesserung des Abscheidegrads eines Zyklons wurde ferner vorgeschlagen, elektrische Kräfte auch innerhalb des Zyklons anzuwenden.

Beispielsweise wurde in dem Dokument DE 37 23 153 A1 vorgeschlagen, aus einem Elektrofilter austretende Rußpartikel, in dem sie mit Hilfe von Sprühelektroden aufgeladen worden sind, in dem Zyklon einem elektrischen Feld mit im wesentlichen radial verlaufenden Feldlinien auszusetzen. Hierzu soll der Zyklontrichter aus einem nichtleitenden Werkstoff aufgebaut sein und an der Innen- oder Außenseite eine metallische Beschichtung aufweisen, die als Koagulations- oder Abscheideelektrode geschaltet ist. Das angelegte elektrische Feld soll die Agglomeration bzw. das Abscheiden der Partikel verbessern, so daß die Abscheidung der Partikel in dem Zyklon nicht nur auf der Fliehkraftabscheidung beruht, sondern durch das elektrische Feld unterstützt wird.

Die in diesem Dokument beschriebene Vorrichtung bedarf aufwendiger Schutzmaßnahmen zur Sicherstellung eines gefahrlosen Betriebs, insbesondere wenn die spannungsführende Schicht auf der Außenseite des Zyklons angebracht ist. Auch in der Fertigung ist eine solche Vorrichtung sehr aufwendig, da sie aus verschiedenen Werkstoffen besteht. Ferner ist im Hinblick auf die Kombination verschiedener Materialien untereinander die Temperaturfestigkeit sowie die Festigkeit der Elektrodenschicht fraglich. Eine kompaktere Bauweise wird schließlich nicht erzielt, da nach wie vor ein vorgeschalteter Agglomerator erforderlich ist.

In anderen Dokumenten wurde vorgeschlagen, die Elektroden im Inneren des Zyklons nicht nur flächenhaft auszubilden, sondern in das Innere hineinragen zu lassen.

Eine solche Anordnung wurde in der Patentschrift US 4,010,011 für einen Axialflußzyklon vorgeschlagen. In einem Axialflußzyklon liegen Gaseintritt und Gasaustritt gegenüber, so daß keine Strömungsumkehr auftritt. Die Drallströmung wird in der dort gezeigten Vorrichtung durch einen axialen Einlauf mit Hilfe von Leitschaufeln erzeugt. Als Sprühelektrode wird ein Draht verwendet, der zwischen dem drallerzeugenden Einlauf und dem Tauchrohr gespannt ist. Der Zyklon ist zur Reinigung der Ansaugluft von Verbrennungsmotoren vorgesehen, d.h. er dient vorwiegend zur Abscheidung mineralischer Stäube. Diese neigen aufgrund ihrer elektrischen Eigenschaften dazu, festhaftende Schichten auf der Niederschlagselektrode zu bilden, deren Austrag schwierig ist. Zur Verbesserung des Austrags wird in der Patentschrift vorgeschlagen, die Niederschlagselektrode mit einer isolierenden Schicht aus einem dielektrischen Material zu beschichten, wobei sowohl der Einlauf als auch das Tauchrohr aus nicht leitenden Werkstoffen hergestellt werden müssen, um die elektrische Isolation der Sprühelektrode zu gewährleisten. Die Anordnung ist daher konstruktiv aufwendig.

Die Unterstützung der Anreicherung durch elektrische Kräfte, die von einer im Innern des Zyklons angeordneten Sprühelektrode ausgehen, wurde für Umkehrflußzyklone in einer theoretischen Arbeit von P. Dietz, Powder Technology, 31 (1982) 221 untersucht. Ein konventioneller Umkehrflußzyklon weist einen Zyklontrichter auf und ein Tauchrohr, das einen Deckel durchdringt und an seinem innenliegenden Ende die Reingasauslaßöffnung bildet. In dieser Veröffentlichung wird davon ausgegangen, daß es erforderlich ist, die Partikel vor dem Eintritt in den Zyklon durch externe Sprüheinrichtungen aufzuladen. Die Anordnung ist demzufolge zweistufig, da eine vorgeschaltete Ionisationsstufe erforderlich ist. Der beschriebene Zyklon ist weiterhin konstruktiv aufwendig, da die Sprühelektrode in dem Zyklon an dem Tauchrohr angebracht ist, was eine hochspannungsfeste Isolierung oder Befestigung des Tauchrohrs erforderlich macht.

Experimentelle Untersuchungen zu derartigen Zyklonen, die im Innern Sprühelektroden aufweisen, sind in mehreren Publikationen veröffentlicht.

In der Publikation von J. Petroll et al. in Freiberger Forschungshefte A 220 (1962) 175, 189 ist ein Elektrofilter-Zyklon beschrieben, der ein Tauchrohr aus einem Isolierstoff aufweist, an dem ein Sprühkorb angeordnet ist. Die Ausbildung des Tauchrohrs als Isolator ist technisch aufwendig, und in der Publikation wird davon ausgegangen, daß die geringfügigen Verbesserungen in der Abscheideleistung, die mit der Sprühelektrode erzielbar seien, den technischen Aufwand nicht rechtfertigen.

In der Veröffentlichung von B. Räbel et al. in Luft- und Kältetechnik (1981) 107 wird ebenfalls ein Elektrozyklonabscheider gezeigt, bei dem die Sprühelektroden auf dem Tauchrohr angebracht sind. In dieser Veröffentlichung wird beschrieben, daß die Sprühelektrodeneinbauten Zu einer Verminderung der Abscheideleistung führen und Elektrozyklonabscheider eine ungünstige Lösung darstellen.

In einer weiteren Veröffentlichung von J. Petroll et al., Luft- und Kältetechnik (1987) 198 wird nochmals die Meinung der Fachwelt dargestellt, nach der die Corona-Entladung keine Verbesserung des Abscheideverhaltens bewirkt, der Einfluß der Elektroden auf die Strömung im Zykloninnern dagegen nachteilig ist.

Zusammenfassend ergibt sich damit, daß nach dem Stand der Technik der Einbau von Sprühelektroden in Zyklone, insbesondere Umkehrzyklone, technisch aufwendige Isolatoren zur Isolation des Tauchrohrs erfordert und nach allgemeiner Auffassung das Strömungsverhalten in dem Zyklon nachteilig beeinflußt. Auch die Aufladungszone, die von der Sprühelektrode im Bereich der Reingasauslaßöffnung gebildet wird, wird als nachteilig angesehen. Zyklone mit in das Innere des Gehäuses hineinragenden Sprühelektroden finden daher bisher keine praktische Anwendung.

Der Erfindung liegt unter Berücksichtigung dieses Stands der Technik die Aufgabe zugrunde, einen eingangs beschriebenen Zyklon zum Abscheiden feiner Partikel aus einem Gasstrom, insbesondere von Ruß aus dem Abgas von Brennkraftmaschinen, der eine in das Innere des Gehäuses hineinragende Sprühelektrode aufweist, an die eine elektrische Hochspannung anlegbar ist, so weiterzubilden, daß er einen höheren Abscheidegrad und eine kompakte Bauweise aufweist, die keinen großen technischen Aufwand bedingt. Die Aufgabe wird gemäß den in den Ansprüchen 1 und 13 wiedergegebenen Merkmalen gelöst. Vorteilhafte Ausgestaltungen der Erfindung sind in den Unteransprüchen angegeben.

Beim erfindungsgemäßen ist Zyklon die Sprühelektrode elektrisch von der Reingasauslaßöffnung isoliert und die Reingasauslaßöffnung elektrisch leitend mit dem Gehäuse verbunden. Eine solche Ausbildung des Zyklons hat den Vorteil, daß technisch aufwendige Maßnahmen zur elektrischen Isolierung der Reingasauslaßöffnung nicht mehr erforderlich sind. Die Sprühelektrode ist mittels eines Isolators von dem Gehäuse elektrisch isoliert, nicht aber die Reingasauslaßöffnung. Die Reingasauslaßöffnung bzw. das Tauchrohr kann aus Metall, insbesondere aus demselben wie das übrige Gehäuse bestehen, und durch unaufwendige Fertigungstechniken wie Schweißen am Zyklon ausgebildet sein.

Ein weiterer Vorteil besteht darin, daß die Sprühelektrode separat von der Reingasauslaßöffnung bzw. dem Tauchrohr angeordnet werden kann. Nach einem anderen Hauptaspekt der Erfindung, der allein oder besonders vorteilhaft in Kombination mit dem ersten Hauptanspruch verwirklicht sein kann, wird daher vorgeschlagen, daß ein die Sprühelektrode tragender Isolator innerhalb des Gehäuses in einem Abstand von der Reingasauslaßöffnung, d.h. ohne unmittelbaren mechanischen Kontakt zu dieser, befestigt ist. Wenn der die Sprühelektrode tragende Isolator nicht an der Reingasauslaßöffnung bzw. dem Tauchrohr, sondern an einer anderen Stelle im Gehäuse befestigt ist, werden bisher unübliche Gestaltungsprinzipien und Anordnungen ermöglicht, die überraschende und vorteilhafte Eigenschaften aufweisen.

In bevorzugten Ausbildungen ist die Reingasauslaßöffnung an einem in das Innere des Gehäuses ragenden Tauchrohr ausgebildet. Auch in diesen Fällen kann die Sprühelektrode vorteilhafterweise elektrisch von dem Tauchrohr isoliert und das Tauchrohr elektrisch leitend mit dem Gehäuse verbunden sein. Vorteilhaft ist auch hier, wenn ein die Sprühelektrode tragender Isolator innerhalb des Gehäuses in einem Abstand von dem Tauchrohr befestigt ist.

Die Erfindung geht von der Überlegung aus, daß es in der turbulenten Drallströmung des Zyklons zu einer teilweisen Zerstörung der lose zusammenhängenden Agglomerate kommt, wobei das dabei entstehende Feingut im Zyklon nur zu einem geringen Teil abgeschieden wird. Durch die Ausnutzung elektrischer Feldkräfte zur Unterstützung der Partikelabscheidung wird erreicht, daß dieser Zerkleinerungseffekt vermieden bzw. durch eine Reagglomeration kompensiert oder zumindest reduziert werden kann. Im Rahmen der Erfindung wurde gefunden, daß durch die Anordnung einer Sprühelektrode im Innern des Zyklons die Agglomeratbildung bzw. die Reagglomeration derart effizient gestaltet werden kann, daß durch die verbesserte direkte Nutzung elektrischer Kräfte zur Unterstützung der Partikelabscheidung sogar auf einen vorgeschaltetem Agglomerator verzichtet und somit eine sehr kompakte Bauweise erzielt werden kann. Es wurde gefunden, daß mit einem erfindungsgemäßen Zyklon sogar solche Partikel abgeschieden werden können, die aufgrund ihrer physikalischen Eigenschaften unter den vorliegenden Bedingungen nicht zur Agglomeration neigen.

Es hat sich herausgestellt, daß die Sprühelektrode so angeordnet und ausgebildet werden kann, daß die von ihr ausgehenden negativen Auswirkungen auf das Strömungsfeld und die Behinderung der Drallströmung so gering und durch das elektrische Feld so weit kompensierbar sind, daß der Abscheidegrad des Zyklons insgesamt erhöht ist. Bisher war man bestrebt, den Innenraum eines Zyklons möglichst frei von zusätzlichen Elementen zu halten, welche die ungestörte Ausbildung der Drallströmung behindern können. Es ist daher überraschend, daß durch eine in den Gehäuseinnenraum ragende Sprühelektrode das Abscheideverhalten nicht verschlechtert, sondern sogar verbessert wird.

Die Ursache dafür, daß die bisherigen experimentellen Arbeiten zu einer wenig positiven Einschätzung von im Innern des Zyklons angeordneten Sprühelektroden gelangen, liegt darin, wie im Rahmen der Erfindung gefunden wurde, daß es in den klassischen Einsatzbereichen von Zyklonen, also zur Abscheidung relativ grober Stäube, nicht sinnvoll ist, Elektrozyklone zu verwenden, da in diesem Fall der positive Effekt der elektrischen Kräfte durch die nachteiligen Auswirkungen der Sprühelektroden auf das Strömungsfeld nicht kompensiert wird. Im Rahmen der Erfindung wurde jedoch gefunden, daß mit Sprühelektroden versehene Zyklone für die Abscheidung von Feinstaub, d.h. von Partikeln, die kleiner als 1 bis 5 µm sind, vorteilhaft einsetzbar sind. In diesem Größenbereich wird, wie gefunden wurde, die Abscheidung durch elektrische Kräfte dominiert, so daß die Nachteile für das Strömungsfeld nicht bedeutsam sind. Bei konventionellen Zyklonen können Nachteile bei der Strömungsführung dagegen nicht in Kauf genommen werden, wenn hohe Abscheidegrade erzielt werden sollen.

Ein Grund für die bisherige Skepsis der Fachwelt gegenüber der Abscheidung von Submikronpartikeln mit Elektrozyklonen, die elektrische Feldkräfte nutzen, besteht darin, daß in der Literatur die Ansicht vertreten wird, daß in diesem Größenbereich die Aufladung nach dem relativ langsamen Mechanismus der Diffusionsaufladung erfolgt, was für die Erzielung hoher Abscheidegrade lange Verweilzeiten voraussetzt, die in einem Zyklon üblicherweise nicht gegeben sind. Man kann zwar die Kinetik der Aufladung durch hohe Stromdichten, d.h. durch den Einsatz von Sprühelektroden mit vielen Spitzen, in gewissen Grenzen beschleunigen. Daraus ergeben sich jedoch je nach Partikelmaterial Probleme mit Ablagerungen auf der Niederschlagselektrode. Im Rahmen der Erfindung wurde gefunden, daß Partikel und Stäube unkritisch sind, die eine hinreichend hohe elektrische Leitfähigkeit aufweisen. Insbesondere wurde gefunden, daß Dieselruß diese wichtige Voraussetzung erfüllt, so daß auch bei sehr hohen elektrischen Stromdichten, die zur Erzielung hoher Abscheidegrade wünschenswert sind, in der Regel keine Probleme mit Ablagerungen auftreten.

Im Rahmen der Erfindung wurde ferner gefunden, daß die Aufladung von Submikronpartikeln schneller erfolgt, als es auf Basis der bekannten Modelle zu erwarten war, und deshalb auch eine Aufladung und Abscheidung von Partikeln, insbesondere Rußpartikeln, trotz kurzer Verweilzeiten im Zyklon möglich ist.

Ein Zyklon nach der Erfindung kann als Umkehrflußzyklon ausgebildet sein, bei dem der Eintrittsbereich und die Reingasauslaßöffnung eintrittsseitig, d.h. im Bereich der Einströmöffnung, angeordnet sind. In einem Umkehrflußzyklon tritt eine Strömungsumkehr auf, da der eintretende Gasstrom nach Ausbildung der Drallströmung in den Eintrittsbereich zurückgeleitet werden muß. Nach dieser Bauart sind bekannte Hochleistungszyklone gefertigt, wobei die Reingasauslaßöffnung zumeist an einem Tauchrohr ausgebildet ist, das durch den Deckel des Zyklons gefuhrt ist.

Eine andere vorteilhafte Ausbildung eines erfindungsgemäßen Zyklons besteht darin, daß er als Axialflußzyklon ausgebildet ist, bei dem der Eintrittsbereich und die Reingasauslaßöffnung in sich im Gehäuse axial gegenüberliegender Endbereichen angeordnet sind. In Axialflußzyklonen tritt keine Strömungsumkehr auf. Bekannte Axialflußzyklone zeigen zumeist eine flachere Trennkurve als Umkehrflußzyklone, d.h. bei vergleichbarer Größe in der Regel eine schlechtere Abscheidung. Dies ist vermutlich darauf zurückzuführen, daß sich die für die Partikelabscheidung maßgebliche Drallströmung in solchen Zyklonen weniger vorteilhaft ausbildet. Die Ausbildung als Umkehrflußzyklon mit einem deckelseitig angeordneten Tauchrohr wird daher im Stand der Technik bei Hochleistungszyklonen bevorzugt. Im Rahmen der Erfindung wurde gefunden, daß sich gerade auch Axialflußzyklone zum Abscheiden feiner Partikel eignen, wenn sie erfindungsgemäß ausgebildet sind. Ein Axialflußzyklon hat den Vorteil, daß der Druckverlust geringer ist.

Die Maßnahmen, die Sprühelektrode elektrisch von der Reingasauslaßöffnung zu trennen und die Reingasauslaßöffnung elektrisch leitend mit dem Gehäuse zu verbinden bzw. den Isolator beabstandet von der Reingasauslaßöffnung zu befestigen, sind sowohl bei Umkehrflußzyklonen als auch bei Axialflußzyklonen vorteilhafterweise dadurch zu realisieren, daß mindestens ein die Sprühelektrode tragendeer Isolator an dem Bereich des Gehäuses befestigt ist, welcher der Reingasauslaßöffnung in axialer Richtung des Gehäuses gegenüberliegt. Wenn der Umkehr- oder Axialflußzyklon ein Tauchrohr aufweist, können die Sprühelektrode und das Tauchrohr vorteilhafterweise von axial gegenüberliegenden Gehäuseenden in den Gehäuseinnenraum ragen. Hierdurch wird eine getrennte Anordnung von Reingasauslaßöffnung bzw. Tauchrohr von der Sprühelektrode erzielt, die strömungstechnisch vorteilhaft ist und konstruktiv unaufwendig hergestellt werden kann. Ein derartiger Zyklon weist ein gegenüber konventionellen Zyklonen verbessertes Abscheideverhalten auf.

Diese Ausbildung hat sich im Rahmen der Erfindung insbesondere bei Axialflußzyklonen als besonders vorteilhaft erwiesen, was im Hinblick auf den Stand der Technik, in dem zur Erzielung eines optimalen Trennverhaltens nur als Umkehrflußzyklone ausgebildete Hochleistungszyklone eingesetzt werden, völlig überraschend ist. Der Grund für die überraschenden Vorteile dieser bevorzugten Ausbildung besteht darin, daß die Abscheidung bei kleinen Strömungsgeschwindigkeiten durch elektrische Kräfte dominiert wird, da die Verweilzeit hinreichend groß ist. Bei größeren Strömungsgeschwindigkeiten hingegen überwiegt der Einfluß der Zentrifugalkraft auf den Abscheidungsprozeß. Allgemein ist daher das Abscheideverhalten umso besser, je geringer die Strömungsgeschwindigkeit in dem Zyklon ist. Dieses Verhalten ist für konventionelle Zyklone untypisch, da sich dort die Abscheidung mit zunehmender Strömungsgeschwindigkeit verbessert.

Der gleichzeitige Einfluß von elektrischen Kräften und von Fliehkräften mit je nach Strömungsgeschwindigkeit und Partikelgröße sich ändernden Anteilen führt daher zu einer Stabilisierung des Betriebsverhaltens eines erfindungsgemäßen Zyklons, das gegenüber Schwankungen in der Partikelgrößeverteilung oder der Strömungsgeschwindigkeit unempfindlicher wird. Die jeweiligen Optimierungs- und Anpassungsmaßnahmen zur Erzielung eines optimalen Betriebsverhaltens, also die Auslegung und Dimensionierung von Sprühelektrode und Hochspannung sowie der geometrischen Abmessungen des Zyklons, kann der Fachmann durch geläufige Berechnungsverfahren oder experimentelle Untersuchungen den jeweiligen Erfordernissen anpassen.

Als allgemeine Regel gilt dabei, daß das Abscheideverhalten umso besser wird, je länger die Strecke ist, mit der die Sprühelektrode in den Gehäuseinnenraum hineinragt. Auch dies ist im Hinblick auf die bisher herrschende Konstruktionsregel, den Innenraum des Zyklons möglichst frei von Einbauten zu halten, ein überraschendes und untypisches Verhalten des erfindungsgemäßen Zyklons.

Der Abscheidebereich und/oder der Partikelsammelbereich können vorteilhafterweise zylinderförmig ausgebildet sein, wie es zumeist bei Axialflußzyklonen der Fall ist. Bevorzugt ist jedoch eine hohlkegelstumpfförmige Ausbildung, wie sie bei den Zyklontrichtern bekannter Hochleistungszyklone anzutreffen ist.

Eine erste vorteilhafte Ausbildung der Anordnung der Sprühelektrode besteht darin, daß mindestens ein Abschnitt der Sprühelektrode im Eintrittsbereich angeordnet ist. Dadurch wird gewährleistet, daß die Partikel bereits bei dem Eintritt in den Zyklon in den Einflußbereich des elektrischen Felds der Sprühelektrode gelangen, wodurch eine effiziente, frühzeitig einsetzende Agglomeratbildung ermöglicht wird.

Eine zweite vorteilhafte Ausbildung besteht darin, daß mindestens ein Abschnitt der Sprühelektrode im Abscheidebereich angeordnet ist. Die Sprühelektrode kann sich dabei über den gesamten Abscheidebereich oder nur über einen Teil erstrecken. Nach dem gegenwärtigen Kenntnisstand über die Erfindung ist dies eine bevorzugte Ausbildung der Erfindung, da die in dem Abscheidebereich herrschenden, sehr starken und turbulenten Strömungsverhältnisse zum größten Teil für die Agglomeratzerstörung verantwortlich sind und durch die Anordnung einer Sprühelektrode in diesem Bereich die Reagglomeration am effizientesten erfolgen kann, bevor die feinen Partikel durch den Querschnitt der Reingasauslaßöffnung entweichen.

Eine dritte vorteilhafte Ausbildung kann darin bestehen, daß mindestens ein Abschnitt der Sprühelektrode im Partikelsammelbereich angeordnet ist. Eine besonders vorteilhafte Ausbildung besteht ferner darin, daß die Sprühelektrode im Eintrittsbereich und im Abscheidebereich angeordnet ist. Auf diese Weise wird die Sprühelektrode in einer die Agglomeratbildung besonders unterstützenden Weise von dem Gasstrom umspült.

Nach einem bevorzugten Merkmal wird vorgeschlagen, daß die Sprühelektrode axial im Gehäuseinnenraum angeordnet ist. Bei einer axialen Anordnung ist eine eventuelle negative Auswirkung auf das Strömungsfeld minimiert, insbesondere aufgrund der Rotationssymmetrie der Anordnung.

Kennzeichnend für eine Sprühelektrode ist, daß sie Sprühelemente aufweist. Sprühelemente sind Elemente der Elektrode, die an ihrer Oberfläche Stellen mit sehr kleinen Krümmungsradien aufweisen. Bekannte Ausbildungen bestehen in Sprühdrähten oder, wenn ein größerer Wirkungsbereich gefordert ist, in Sprühkörben oder verteilt angeordneten Sprühspitzen. Mit einer Vielzahl an Sprühspitzen ist eine hohe Ladungsträgerkonzentration erreichbar. Die Sprühspitzen sind vorteilhafterweise so angeordnet, daß ihr Abstand zu der Gehäugewand im wesentlichen gleich ist, so daß eine gleichmäßige Überschlagspannung resultiert. Die Sprühspitzen sind häufig umfangsverteilt an Sprühscheiben angeordnet, die im Rahmen der Erfindung bevorzugt sind.

In einer vorteilhaften Weiterbildung können mehrere Sprühelektroden vorgesehen sein. Die mehreren Sprühelektroden können gleich oder unterschiedlich geformt und vorteilhafterweise an unterschiedliche Hochspannungen angelegt sein. Hierdurch wird es möglich, lokal an unterschiedliche Strömungsverhältnisse in dem Zyklon angepaßte Sprühelektroden einzusetzen und das Abscheideverhalten weiter zu optimieren.

Die Vorteile des Zyklons nach dieser Erfindung gegebenüber dem Stand der Technik bestehen darin, daß der Abscheidegrad verbessert und, insbesondere bei seiner Anwendung ohne einen kombinierten, vorgeschalteten Agglomerator, die Baugröße reduziert und der Druckverlust verringert ist. Ferner ist der konstruktive Aufwand für die Herstellung und den gefahrlosen Betrieb des Zyklons vermindert. Der Anwendungsbereich von Zyklonen wird durch die Erfindung auf Partikel bis weit unter 0,1 µm und auf nicht oder schlecht agglomerierbare Partikel erweitert.

Der erfindungsgemäße Zyklon eignet sich grundsätzlich zur Abscheidung feinster flüssiger und/oder fester Partikel aus Gasströmen. In Verbindung mit einer vorgeschalteten Kondensationsstufe können ferner auch kondensierbare gasförmige Substanzen abgeschieden werden. Fur die Abscheidung fester Partikel kann er beispielsweise bei der Dieselrußabscheidung zur Abgasreinigung von stationären und instationären Dieselmotoren, zum Beispiel bei Stromerzeugungsanlagen, Schiffen, Lokomotiven und Kraftfahrzeugen, oder zur Erzeugung sauberer Inertgase aus Verbrennungsprozessen eingesetzt werden. Die Abscheidung fester Partikel mit Hilfe des erfindungsgemäßen Zyklons ist auch im Zusammenhang mit der Rußabscheidung zur Produktrückgewinnung bei der Rußerzeugung oder beim Rußblasen in kleinen Kesselanlagen möglich, sowie bei der Salzabscheidung in der Düngemittelindustrie und der Abscheidung von Sublimaten bei Schmelzprozessen. Die Abscheidung flüssiger Partikel kommt beispielsweise bei der Abscheidung von sogenanntem "blauen Rauch" aus Shreddern oder bei der Spanplattenproduktion in Betracht, sowie bei der Abluftreinigung in Lackieranlagen. Gasförmige Substanzen, die in Verbindung mit einer vorgeschalteten Kondensationsstufe abgeschieden werden können, fallen beispielsweise in Form von Lösungsmitteln bei der Produktion von Flüssigfarben oder in Form von Geruchsstoffen aus Räuchereiabluft an. Auch eine simultane Abscheidung von flüssigen und festen Partikeln ist möglich, beispielsweise bei der Abscheidung von Staub und bituminösen Stoffen in Asphaltanlagen und bei der Dachpappeproduktion oder bei der Abluftreinigung hinter kleineren Anodenbrennöfen in der Aluminiumindustrie.

Ein anhand der Darstellung in den Zeichnungen im folgenden näher beschriebenes und erläutertes Ausführungsbeispiel der Erfindung läßt weitere vorteilhafte Merkmale und Besonderheiten erkennen. Es zeigen:
- Figur 1: eine schematische Darstellung der Funktionsweise eines Zyklons nach dem Stand der Technik,
- Figur 2: einen Schnitt durch einen Zyklon nach dem Stand der Technik,
- Figur 3: eine schematische Darstellung eines Zyklons mit vorgeschaltetem Agglomerator nach dem Stand der Technik,
- Figur 4: eine schematische Darstellung eines Zyklons mit darin angeordneter Sprühelektrode nach dem Stand der Technik,
- Figur 5: einen Schnitt durch einen Zyklon nach der Erfindung mit darin angeordneter Sprühelektrode und
- Figur 6: eine Sprühscheibe mit Sprühspitzen.

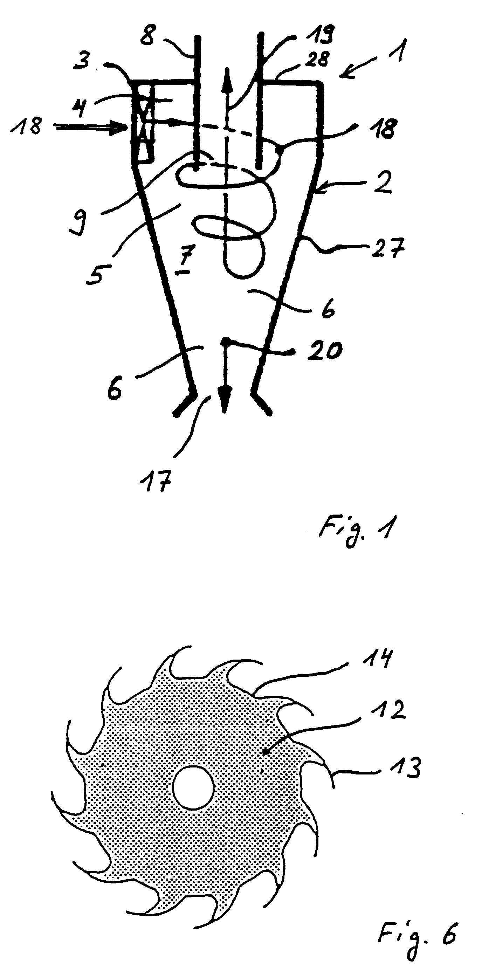

Die Figur 1 zeigt in schematischer Darstellung die Funktionsweise eines Hochleistungs-Umkehrflußzyklons 1 nach dem Stand der Technik. Das Gehäuse 2 umfaßt einen Eintrittsbereich 4 mit einer darin mundenden Einströmöffnung 3, einen Abscheidebereich 5 und einen hohlkegelstumpfförmig ausgebildeten Partikelsammelbereich 6, der als Zyklontrichter 27 bezeichnet wird. Durch die Einströmöffnung 3 tritt das zu reinigende Gas 18 mit den darin enthaltenen Partikeln bzw. Agglomeraten tangential in den Gehäuseinnenraum 7 in den Eintrittsbereich 4 ein. Die Partikel beschreiben eine Schraubenlinie, die sich in dem Abscheidebereich 5 und dem Zyklontrichter 27 fortsetzt. Durch die dabei auftretende Fliehkraft gelangen die Partikel an den äußeren Rand des Zyklons 1, reichern sich in dem Partikelsammelbereich 25 an und sinken durch die Staubaustragsöffnung 17 ab oder werden mit einem Schmutz-gasstrom 20 ausgespült. Das den Zyklon 1 verlassende Reingas 19 tritt durch den Querschnitt der Reingasauslaßöffnung 9 in ein zentrales Tauchrohr 8 ein, das durch den Deckel 28 in den Gehäuseinnenraum 7 gefuhrt ist. Die Reingasauslaßöffnung 9 ist eintritssseitig angeordnet, so daß die Strömungsweg des Gases 18 im Gehäuseinnern 7 eine Umkehrung erfahren muß, um durch die Reingasauslaßöffnung 9 austreten zu können.

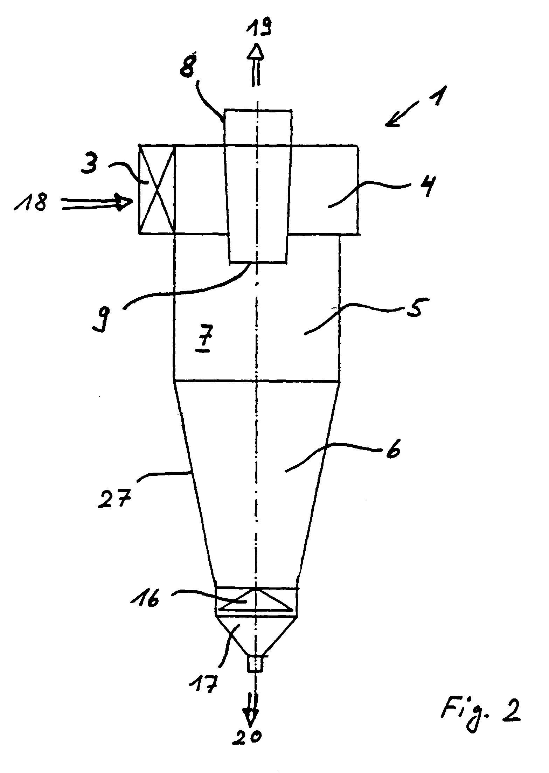

In Figur 2 ist ein schematischer Schnitt durch einen anderen Hochleistungs-Umkehrflußzyklon 1 nach dem Stand der Technik dargestellt, der einen Apexkegel 16 zur Stabilisierung der Wirbeltrombe aufweist. Zur Ausbildung einer stabilen Wirbeltrombe und einer gut zentrierten Drehströmung zur Erzielung eines hohen Abscheidegrads werden im Stand der Technik weitere Maßnahmen vorgeschlagen, um die Einströmung des Gases durch die Einströmöffnung 3 in den Eintrittsbereich 4 so zu gestalten, daß die Ausbildung der Drallströmung und damit der Abscheidegrad verbessert wird. Hierzu ist beispielsweise der Einbau von Leitblechen oder ein Spiraleinlauf vorgesehen. Der Gehäuseinnenraum 7 wird nach dem Stand der Technik so weit wie möglich von die Strömung behindernden Elementen freigehalten.

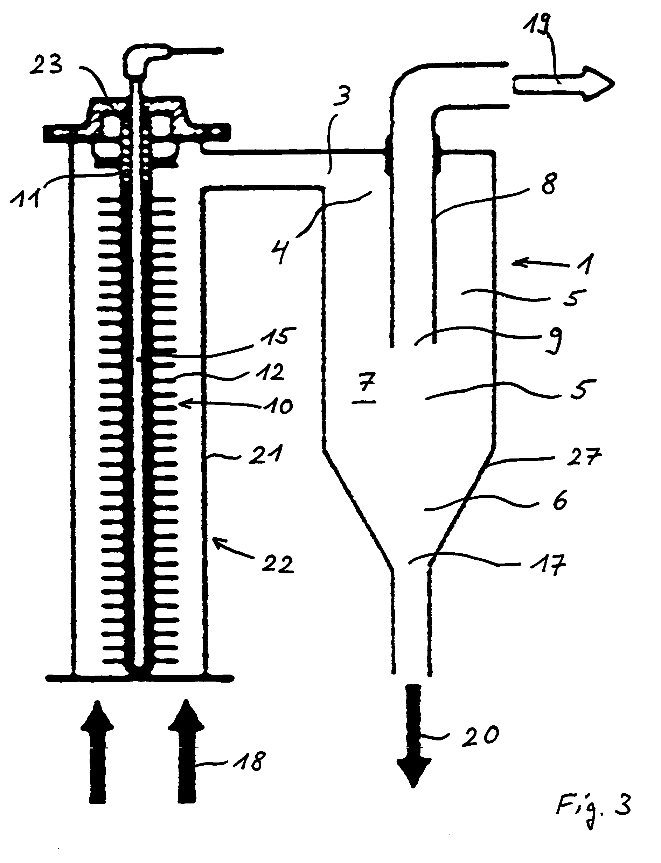

Die Figur 3 zeigt eine schematische Darstellung eines Zyklons 1 mit einem vorgeschaltetem Agglomerator 22 nach dem Stand der Technik. Das zu reinigende Gas 18 mit den darin enthaltenen Partikeln wird zunächst einem rohrförmigen Agglomerator 22 zugeführt, der eine Sprühelektrode 10 aufweist. Die Sprühelektrode 10 ist mittels eines Isolators 11 mit dem Agglomeratorgehäuse 21 verbunden und kann durch eine Hochspannungsdurchführung 23 an eine nicht dargestellte Hochspannungsquelle angeschlossen werden. Die Sprühelektrode 10 weist einen axial orientierten Elektrodenfinger 15 auf, entlang dessen Sprühscheiben 12 angeordnet sind. In dem Agglomerator 22 bilden sich aus den mit dem Gas 18 eingeleiteten Partikeln Agglomerate, die durch die Einströmöffnung 3 in den Zyklon 1 gelangen und dort in der zuvor beschriebenen Weise abgeschieden werden. Diese Darstellung macht den großen Platzbedarf der kombinierten Bauweise nach dem Stand der Technik deutlich. Ferner ist ersichtlich, daß diese Bauweise einen relativ hohen Druckverlust bedingt.

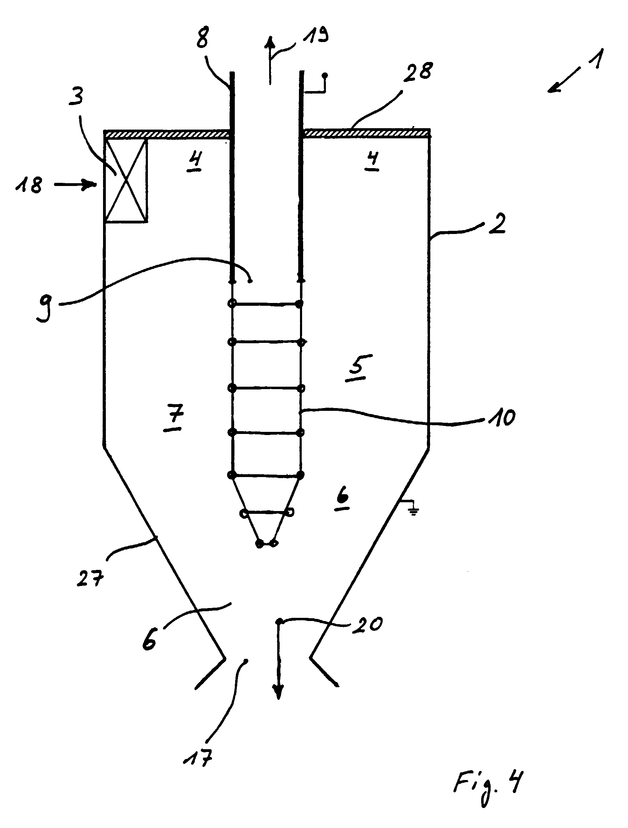

In Figur 4 ist ein im Stand der Technik vorgeschlagener Hochleistungs-Umkehrflußzyklon 1 schematisch dargestellt, der eine in den Gehäuseinnenraum 7 ragende Sprühelektrode 10 aufweist. Sein Aufbau entspricht den in den Figuren 1 und 3 dargestellten Zyklonen, wobei er die Besonderheit aufweist, daß an dem zentralen, durch den Deckel 28 geführten Tauchrohr 8 ein sogenannter Sprühkorb befestigt ist. An diese Sprühelektrode 10 ist eine Hochspannung anlegbar, die über das Tauchrohr 8 zugeführt wird. Aus diesem Grund ist es erforderlich, den Deckel 28 als Isolator auszubilden, um die Sprühelektrode 10 und das Tauchrohr 8 gegen das geerdete Gehäuse 2 elektrisch zu isolieren. Ferner ist ein weiterer, nicht dargestellter Isolator erforderlich, um das auslaßseitige Ende des Tauchrohrs 8 gegen die daran angeschlossene folgende Apparatur zu isolieren. Die Figur 4 macht somit deutlich, daß die bekannte Ausbildung technisch aufwendig ist. Auch wird die von der Sprühelektrode 10 ausgehende, die Reingasauslaßöffnung 9 umgebende Raumladungszone als nachteilig angesehen.

In einer von der Figur 4 abgewandelten Ausbildung wurde im Stand der Technik vorgeschlagen, das Tauchrohr 8 nicht aus Metall, sondern aus einem Isolierstoff zu fertigen. In einer solchen Anordnung bildet das nichtleitende Tauchrohr 8 selbst den die Sprühelektrode 10 tragenden Isolator, und der Deckel 28 kann aus Metall gefertigt sein. Es besteht aber der Nachteil, daß das Tauchrohr 8 selbst sowie dessen Durchfuhrung durch den Deckel 28 technisch aufwendig sind sowie eine zusätzliche Hochspannungsdurchfuhrung für die Zufuhrung des elektrischen Stroms zu dem Sprühkorb erforderlich ist.

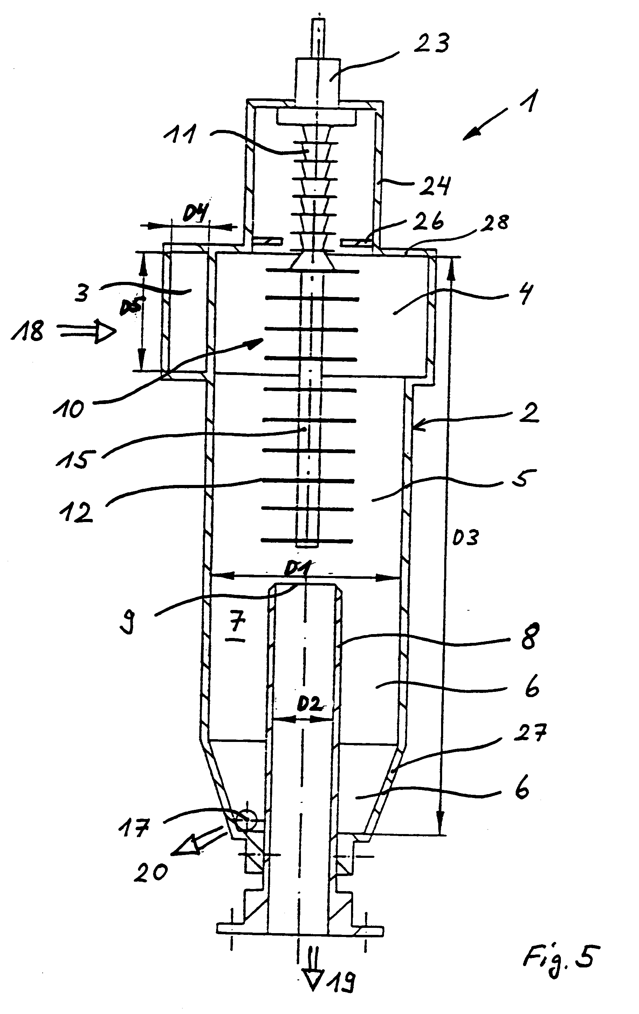

Die Figur 5 zeigt einen Schnitt durch einen Zyklon 1 nach der Erfindung. Das Gehäuse 2 umfaßt eine Einströmöffnung 3, die in einen Eintrittsbereich 4 mündet. Die Einströmöffnung 3 kann als axialer Einlauf oder als tangentialer Schlitzeinlauf ausgebildet sein. Hierbei können in bekannter Weise Leitbleche oder ähnliche Strömungsleitelemente zur Optimierung der Einströmung vorgesehen sein. Bevorzugt ist die dargestellte Ausbildung der Einströmöffnung 3 als Wendel- oder Spiraleinlauf, die im Vergleich zu dem einfachen Schlitzeinlauf eine bessere Zentrierung der Drehströmung bewirkt. An den hohlzylinderförmigen Eintrittsbereich 4 schließt sich im Strömungsweg des zu reinigenden Gases 18 ein hohlzylinderförmiger Abscheidebereich 5 an, der in einen zylinderförmig und hohlkegelstumpfförmig ausgebildeten Partikelsammelabschnitt 6 übergeht.

Im Gehäuseinnenraum 7 ist eine in den Innenraum ragende Sprühelektrode 10 angeordnet, die mittels eines Isolators 11 von dem Gehäuse 2 elektrisch isoliert ist. Die Sprühelektrode 10 ist mittels einer Hochspannungsdurchfuhrung 23 an eine nicht dargestellte Hochspannungsquelle anschließbar. Der Isolator 11 ist in einem Gehäuseansatz 24 angeordnet, in dem eine strömungsarme Zone ausgebildet ist. Auf diese Weise wird einer Verschmutzung und damit einhergehenden Kriechströmen durch eingelagerte Partikel entgegengewirkt. Zusätzlich ist eine Blende 26 vorgesehen, die den Isolator 11 ebenfalls vor Partikeln schützt. Ferner könnte auch vorgesehen sein, daß der Isolator 11 mittels zugeführter Spülluft umspülbar ist, um Partikel fernzuhalten.

Die Sprühelektrode 10 ist axial im Gehäuseinnenraum 7 angeordnet und weist einen axial orientierten, stabförmigen Finger 15 auf, der mehrere Sprühscheiben 12 trägt. Die Sprühscheiben 12 sind parallel und beabstandet an dem Elektrodenfinger 15 angebracht und werden von diesem senkrecht durchdrungen. Durch die axiale und rotationssymmetrische Anordnung wird erreicht, daß die Ausbildung der Drallströmung möglichst wenig behindert wird. Der Durchmesser der Sprühscheiben 12 bzw. der Sprühelektrode 10 entspricht vorteilhafterweise 40 bis 60 % des Innendurchmessers D1 des Abscheidebereichs 5. Im dargestellten Ausführungsbeispiel beträgt der Innendurchmesser D1 120 mm, die Länge D3 aus Eintrittsbereich 4, Abscheidebereich 5 und Partikelsammelbereich 6 390 mm und die Einströmöffnung 3 hat eine Breite D4 von 25 mm und eine Höhe D5 von 65 mm.

Die Sprühelektrode 10 ist im Eintrittsbereich 4 und einem daran anschließenden Teil des Abscheidebereichs 5 angeordnet. Hierdurch wird eine effiziente Agglomeratbildung bzw. Reagglomeration zerbrochener Agglomerate erreicht und ein hoher Abscheidegrad erzielt. Damit die Sprühelektrode 10 im Eintrittsbereich 4 von dem eintretenden Gas 18 umspült werden kann, ist der Isolator 11 in einem oben angeordneten Gehäuseansatz 24 untergebracht, durch den der Innenraum 7 nach oben verlängert wird. Das Tauchrohr 8 mit der Reingasauslaßöffnung 9 für das Reingas 19 ragt am unteren, der Einströmöffnung 3 axial gegenüberliegenden Ende des Zyklons 1 von dem durchmesserkleineren Ende des hohlkegelstumpfförmigen Zyklontrichters 27 in den Gehäuseinnenraum 7. Es ist elektrisch leitend und elektrisch leitend mit dem Gehäuse 2 verbunden. Die Sprühelektrode 10 kann erforderlichenfalls an ihrem dem Tauchrohr 8 zugewandten Ende durch einen weiteren Isolator gehalten werden, der beispielsweise an dem Tauchrohr 8 befestigt ist.

Die gesamte Anordnung könnte auch in einer für Hochleistungszyklone konventionellen Weise mit einem von oben in den Gehäuseinnenraum 7 ragenden Tauchrohr 8 ausgebildet sein, wobei der die Sprühelektrode 10 haltende Isolator 11 an dem zyklontrichterseitigen Gehäuseende befestigt wäre. Bei einer solchen Anordnung ist es in der Regel aber schwieriger, die Sprühelektrode 10 bis in den Eintrittsbereich 4 ragen zu lassen. In beiden Fällen kann zusätzlich ein Apexkegel 16 vorgesehen sein, der im ersten Fall beispielsweise als Teil des Tauchrohrs 8, im zweiten Fall als Teil des Isolators 11 ausgebildet sein könnte.

Im Bereich des durchmesserkleineren Endes des Zyklontrichters 27 ist eine Staubaustragsöffnung 17 zum Austragen der abgeschiedenen Partikel mittels eines Teilvolumenstroms des Gasstromes 18 vorgesehen. Sie ist für das tangentiale Absaugen der Partikel ausgebildet. Der Teilvolumenstrom des Schmutzgases 20 beträgt ca. 1 % bis 5 %.

Das mit feinen Partikeln versetzte Gas 18 tritt durch die Einströmöffnung 3 in den Eintrittsbereich 4 ein. Dabei wird es in Rotation um die Längsachse des Zyklons 1 versetzt, was durch die Ausbildung der Einströmöffnung 3 als Spiraleinlauf begünstigt wird. Im Eintrittsbereich 4 umspült das Gas einen Abschnitt der Sprühelektrode 10, an die eine Hochspannung angelegt ist. Unter dem Einfluß der elektrischen Feldkräfte kann es zur Bildung von Agglomeraten der Partikel kommen. Die elektrischen Feldkräfte unterstützen jedenfalls die Abscheidung der Partikel. Die Drallströmung setzt sich in den an den Eintrittsbereich 4 angrenzenden Abscheidebereich 5 fort. Die Agglomerate werden durch die Fliehkraft, welche durch die vergrößerte Masse der Agglomerate gegenüber feinen Partikeln vergrößert ist, in überwiegend radialer Richtung nach außen getrieben und auf diese Weise durch die in Wandnähe nach unten gerichtete Grenzschichtströmung aus dem Gasstrom ausgeschieden. Das Reingas 19 verläßt den Gehäuseinnenraum 7 durch den Querschnitt der Reingasauslaßöffnung 9 des zentralen Tauchrohrs 8. Die abgeschiedenen Partikel bzw. Agglomerate werden durch die Staubaustragsöffnung 17 mit einem Teilvolumenstrom als Schmutzgas 20 ausgespült.

Durch die starke und turbulente Drallströmung kommt es im Gehäuseinnenraum 7 zu einer Zerstörung von Agglomeraten, was sich infolge der reduzierten Fliehkräfte bei konventionellen Zyklonen ohne Sprühelektrode 10 nachteilig auf den Abscheidegrad auswirkt, insbesondere für feine Partikel. Durch die Anordnung der Sprühelektrode 10 im Gehäuseinnenraum 7, insbesondere im Eintrittsbereich 4 und im Abscheidebereich 5, wird dieser Nachteil kompensiert, wobei die elektrischen Kräfte an einer effizienten Stelle angreifen. Andererseits wirken die elektrischen Kräfte der Zerkleinerung der Agglomerate entgegen, indem sie eine Reagglomeration der Bruchstücke bewirken. Ferner kommt es zwischen der Sprühelektrode 10 und dem Gehäuse 2 zur Ausbildung eines elektrischen Feldes, so daß die aufgeladenen Partikel den nach außen in Richtung der Fliehkräfte wirkenden Coulomb-Kräften ausgesetzt sind, welche die Partikelabscheidung unterstützen. Der Abscheidegrad ist somit insgesamt verbessert und der Anwendungsbereich ist auf nicht agglomerierbare Feinstäube erweitert. Gleichzeitig ist der Aufbau technisch unaufwendig.

Durch die geeignete Auslegung der Geometrie und der Strömungsverhältnisse des Zyklons 1 sowie der Form, Anzahl, Anordnung und jeweiligen Spannung der einen oder mehreren Elektroden 10 läßt sich der Abscheidegrad optimieren. Die Einbau- oder Betriebslage des Zyklons ist natürlich beliebig, da Schwerkrafteinflüsse vernachlässigt werden können.

Die Figur 5 zeigt ein Ausführungsbeispiel einer Sprühscheibe 12 mit Sprühspitzen 13. Sie hat einen Durchmesser von ca. 66 mm und eine Stärke von 0,05 mm. An ihrem Umfang sind Sprühspitzen 13 angeordnet sind, die in Richtung des Umfangs 14 gekrümmt sind. Die Spannung an der Elektrode liegt im Bereich zwischen 10 kV und 20 kV. Beim Anlegen einer Spannung oberhalb der sogenannten Koronaeinsatzspannung kommt es zum Freisetzen von Ladungsträgern an den Sprühspitzen 13. Dies führt zur Aufladung der Partikel und damit zur Agglomeratbildung.

### Bezugszeichenliste

- 1: Zyklon
- 2: Gehäuse
- 3: Einströmöffnung
- 4: Eintrittsbereich
- 5: Abscheidebereich
- 6: Partikelsammelbereich
- 7: Gehäuseinnenraum
- 8: Tauchrohr
- 9: Reingasauslaßöffnung
- 10: Sprühelektrode
- 11: Isolator
- 12: Sprühscheibe
- 13: Sprühspitze
- 14: Umfang
- 15: Elektrodenfinger
- 16: Apexkegel
- 17: Staubaustragsöffnung
- 18: Gas
- 19: Reingas
- 20: Schmutzgas
- 21: Agglomeratorgehäuse
- 22: Agglomerator
- 23: Hochspannungsdurchführung
- 24: Gehäuseansatz
- 25:
- 26: Blende
- 27: Zyklontrichter
- 28: Deckel
- 29:
- 30:
- D1: Innendurchmesser zu 5
- D2: Innendurchmesser zu 8
- D3: Länge
- D4: Breite zu 3
- D5: Höhe zu 3

## Patentansprüche

1. Zyklon zum kontinuierlichen Abscheiden feiner Partikel aus einem Gasstrom, insbesondere von Ruß aus dem Abgas von Brennkraftmaschinen, mittels Strömungseffekten in einer in dem Zyklon ausgebildeten Drallströmung, durch welche die Partikel in einem Partikelsammelbereich (6) angereichert werden, umfassend ein Gehäuse (2), das einen Eintrittsbereich (4), in den eine Einströmöffnung (3) mündet, einen im Strömungsweg des Gases stromabwärts von dem Eintrittsbereich (4) angeordneten Abscheidebereich (5) und den im Strömungsweg der Partikel stromabwärts von dem Abscheidebereich (5) angeordneten Partikelsammelbereich (6) einschließt, welcher Zyklon eine in das Innere (7) des Gehäuses (2) mündende Reingasauslaßöffnung (9) und eine in das Innere (7) des Gehäuses (2) hineinragende Sprühelektrode (10), an die eine elektrische Hochspannung anlegbar ist, aufweist, bei welchem Zyklon die Sprühelektrode (10) elektrisch von der Reingasauslaßöffnung (9) isoliert ist, die Reingasauslaßöffnung (9) elektrisch leitend mit dem Gehäuse (2) verbunden ist und bei dem ein die Sprühelektrode (10) tragender Isolator (11) innerhalb des Gehäuses (2) in einem Abstand von der Reingasauslaßöffnung (9) befestigt ist,
dadurch gekennzeichnet, daß
der Zyklon zum Abscheiden feiner, elektrisch leitender Partikel im Größenbereich kleiner als 5 µm, insbesondere kleiner als 1 µm, ausgebildet ist, wobei die Sprühelektrode (10) derart ausgebildet ist, daß die Partikel unter dem Einfluß der elektrischen Feldkräfte der Sprühelektrode (10) Agglomerate bilden und der die Sprühelektrode (10) tragende Isolator (11) in einem Gehäuseansatz (24) angeordnet ist, in dem eine strömungsarme Zone ausgebildet ist.

2. Zyklon nach Anspruch 1, dadurch gekennzeichnet, daß ein die Sprühelektrode (10) tragender Isolator (11) mittels zugeführter Spülluft umspülbar ist.

3. Zyklon nach Anspruch 1 oder 2, dadurch gekennzeichnet, daß eine Blende (26) vorgesehen ist, die einen die Sprühelektrode (10) tragenden Isolator (11) vor Partikeln schützt.

4. Zyklon nach einem der Ansprüche 1 bis 3, dadurch gekennzeichnet, daß mindestens ein Abschnitt der Sprühelektrode (10) im Eintrittsbereich (4) angeordnet ist.

5. Zyklon nach einem der Ansprüche 1 bis 4, dadurch gekennzeichnet, daß mindestens ein Abschnitt der Sprühelektrode (10) im Abscheidebereich (5) angeordnet ist.

6. Zyklon nach einem der Ansprüche 1 bis 5, dadurch gekennzeichnet, daß die Sprühelektrode (10) mindestens eine Sprühscheibe (12) aufweist.

7. Zyklon nach einem der Ansprüche 1 bis 6, dadurch gekennzeichnet, daß die Sprühelektrode (10) eine Vielzahl an Sprühspitzen (13) aufweist.

8. Zyklon nach einem der Ansprüche 1 bis 7, dadurch gekennzeichnet, daß die Reingasauslaßöffnung (9) an einem in das Innere (7) des Gehäuses (2) ragenden Tauchrohr (8) ausgebildet ist.

9. Zyklon nach einem der Ansprüche 1 bis 8, dadurch gekennzeichnet, daß der Zyklon als Umkehrflußzyklon ausgebildet ist, bei dem der Eintrittsbereich (4) und die Reingasauslaßöffnung (9) eintrittsseitig angeordnet sind.

10. Zyklon nach einem der Ansprüche 1 bis 9, dadurch gekennzeichnet, daß der Zyklon als Axialflußzyklon ausgebildet ist, bei dem der Eintrittsbereich (4) und die Reingasauslaßöffnung (9) in sich im Gehäuse (2) axial gegenüberliegenden Endbereichen angeordnet sind.

11. Zyklon nach Anspruch 9 oder 10, dadurch gekennzeichnet, daß mindestens ein die Sprühelektrode (10) tragender Isolator (11) an dem Bereich des Gehäuses (2) befestigt ist, welcher der Reingasauslaßöffnung (9) in axialer Richtung des Gehäuses (2) gegenüberliegt.

12. Zyklon nach den Ansprüchen 8 und 11, dadurch gekennzeichnet, daß die Sprühelektrode (10) und das Tauchrohr (8) von axial gegenüberliegenden Gehäuseenden in den Gehäuseinnenraum (7) ragen.

13. Verfahren zum kontinuierlichen Abscheiden feiner Partikel aus einem Gasstrom, insbesondere von Ruß aus dem Abgas von Brennkraftmaschinen, mittels Strömungseffekten in einer in einem Zyklon ausgebildeten Drallströmung, durch welche die Partikel in einem Partikelsammelbereich (6) angereichert werden, wobei der Zyklon ein Gehäuse (2) umfaßt, das einen Eintrittsbereich (4), in den eine Einströmöffnung (3) mündet, einen im Strömungsweg des Gases stromabwärts von dem Eintrittsbereich (4) angeordneten Abscheidebereich (5) und den im Strömungsweg der Partikel stromabwärts von dem Abscheidebereich (5) angeordneten Partikelsammelbereich (6) einschließt, welcher Zyklon eine in das Innere (7) des Gehäuses (2) mündende Reingasauslaßöffnung (9) und eine in das Innere (7) des Gehäuses (2) hineinragende Sprühelektrode (10), an die eine elektrische Hochspannung angelegt wird, aufweist, bei welchem Zyklon die Sprühelektrode (10) elektrisch von der Reingasauslaßöffnung (9) isoliert ist, die Reingasauslaßöffnung (9) elektrisch leitend mit dem Gehäuse (2) verbunden ist und bei dem ein die Sprühelektrode (10) tragender Isolator (11) innerhalb des Gehäuses (2) in einem Abstand von der Reingasauslaßöffnung (9) befestigt ist,
dadurch gekennzeichnet, daß
das Verfahren zum Abscheiden feiner, elektrisch leitender Partikel im Größenbereich kleiner als 5 µm, insbesondere kleiner als 1 µm, ausgebildet ist, wobei die Sprühelektrode (10) derart ausgebildet ist, daß die Partikel unter dem Einfluß der elektrischen Feldkräfte der Sprühelektrode (10) Agglomerate bilden und der die Sprühelektrode (10) tragende Isolator (11) in einem Gehäuseansatz (24) angeordnet ist, in dem eine strömungsarme Zone ausgebildet ist.

14. Verfahren nach Anspruch 13, dadurch gekennzeichnet, daß ein Zyklon nach einem der Ansprüche 1 bis 12 verwendet wird.

## Claims

1. Cyclone for continuous separation of fine particles from a gas stream, in particular of soot from the exhaust gas of internal combustion engines, using flow effects in a rotating stream formed in the cyclone with which the particles are enriched in a particle collection region (6), comprising a casing (2) having an entrance region (4) into which an inlet (3) feeds, a separation region (5) disposed in the flow path of the gas downstream of the entrance region (4), and a particle collection region (6) disposed in the flow path of the particles downstream of the separation region (5), the cyclone comprising a purified gas outlet (9) connecting into the casing (2) inside (7) and a spray electrode (10), projecting into the inside (7) of the casing (2), to which an electrical high voltage can be applied, the cyclone having the spray electrode (10) electrically insulated from the purified gas outlet (9), the purified gas outlet (9) connected to the casing (2) in an electrically conducting manner and with which an insulator (11) bearing the spray electrode (10) is mounted inside the casing (2) at a separation from the purified gas outlet (9),
characterized in that
the cyclone is adapted for the separation of fine, electrically conducting particles, in the size region below 5 µm, in particular smaller than 1 µm, wherein the spray electrode (10) is configured in such a manner that the particles form agglomerates under the influence of the electric field forces of the spray electrode (10) and the insulator (11), bearing the spray electrode (10), is disposed in a casing extension (24) in which a zone of weak flow is formed.

2. The cyclone of claim 1, characterized in that an insulator (11) bearing the spray electrode (10) can be surrounded by introduced rinsing air.

3. The cyclone of claim 1 or 2, characterized in that a collimator (26) is provided for protecting the insulator (11) bearing the spray electrode (10) from particles.

4. The cyclone of any one of the claims 1 through 3, characterized in that at least one section of the spray electrode (10) is disposed in the entrance region (4).

5. The cyclone of any one of the claims 1 through 4, characterized in that at least one section of the spray electrode (10) is disposed in the separation region (5).

6. The cyclone of any one of the claims 1 through 5, characterized in that the spray electrode (10) comprises at least one spray disk (12).

7. The cyclone of any one of the claims 1 through 6, characterized in that the spray electrode (10) comprises a plurality of spray tips (13).

8. The cyclone any one of the claims 1 through 7, characterized in that the purified gas outlet (9) is formed on a vortex finder (8) projecting into the inside (7) of the casing (2).

9. The cyclone of any one of the claims 1 through 8, characterized in that the cyclone is configured as a return flow cyclone having the entrance region (4) and the purified gas outlet (9) disposed at the entrance side.

10. The cyclone of any one of the claims 1 through 9, characterized in that the cyclone is configured as an axial flow cyclone having the entrance region (4) and the purified gas outlet (9) disposed in the casing (2) at end regions lying across from each other.

11. The cyclone of claim 9 or 10, characterized in that at least one insulator (11) bearing the spray electrode (10) is mounted at that region of the casing (2) which lies, in an axial direction of the casing (2), across from the purified gas outlet (9).

12. The cyclone of claims 8 and 11, characterized in that the spray electrode (10) and the vortex finder (8) project into the casing inside (7) from axially opposing ends of the casing.

13. Method for the continuous separation of fine particles from a stream of gas, in particular soot from the exhaust gas of internal combustion engines, via flow effects in a rotating stream formed in a cyclone by means of which the particles are enriched in a particle collection region (6), wherein the cyclone has a casing (2) comprising an entrance region (4), into which an inlet (3) feeds, a separation region (5) disposed in the flow path of the gas downstream of the entrance region (4), and a particle collection region (6) disposed in the flow path of the particles downstream of the separation region (5), the cyclone having a purified gas outlet (9) connecting into the inside (7) of the casing (2), and a spray electrode (10), to which an electrical high voltage is applied, projecting into the inside (7) of the casing (2), the cyclone having the spray electrode (10) electrically insulated from the purified gas outlet (9), the purified gas outlet (9) connected to the casing (2) in an electrically conducting manner, and with which an insulator (11) bearing the spray electrode (10) is mounted inside the casing (2) at a separation from the purified gas outlet (9),
characterized in that
the method is adapted for separation of fine, electrically conducting particles in the size range smaller than 5 µm, in particular less than 1 µm, wherein the spray electrode (10) is configured in such a manner that the particles form agglomerates under the influence of the electric field forces of the spray electrode (10) and the insulator (11) bearing the spray electrode (11) is disposed in a casing extension (24) in which a zone of weak flow is formed.

14. The method of claim 13, characterized in that a cyclone according to any one of the claims 1 through 12 is utilized.

## Revendications

1. Cyclone pour la séparation continue de particules fines d'un courant de gaz, en particulier de la suie des gaz d'échappement des moteurs à combustion interne, au moyen d'effets d'écoulement dans un écoulement giratoire formé dans le cyclone par lesquels les particules sont concentrées dans une zone de collecte de celles-ci (6), comprenant un corps (2) qui renferme une zone d'entrée (4) dans laquelle débouche un orifice d'entrée (3), une zone de séparation (5) placée sur le chemin d'écoulement du gaz en aval de la zone d'entrée (4), et la zone de collecte des particules (6), placée sur le chemin d'écoulement des particules en aval de la zone de séparation (5), lequel cyclone présente un orifice de sortie du gaz épuré (9) qui débouche à l'intérieur (7) du corps (2) et une électrode d'émission (10) qui entre à l'intérieur (7) du corps (2) et à laquelle peut être appliquée une haute tension électrique, cyclone dans lequel l'électrode d'émission (10) est isolée électriquement de l'orifice de sortie du gaz épuré (9), l'orifice de sortie du gaz épuré (9) est relié électriquement au corps (2), et un isolateur (11) portant l'électrode d'émission (10) est fixé à l'intérieur du corps (2) à une certaine distance de l'orifice de sortie du gaz épuré (9),
caractérisé par le fait qu'il est conçu pour la séparation de particules conductrices fines de grosseur inférieure à 5 µm, en particulier inférieure à 1 µm, l'électrode d'émission (10) étant conçue de façon telle que les particules forment des agglomérats sous l'influence des forces du champ électrique de celle-ci, et l'isolateur (11) portant l'électrode d'émission (10) étant placé dans un appendice (24) du corps dans lequel est formée une zone à faible écoulement.

2. Cyclone selon la revendication 1, caractérisé par le fait que l'isolateur (11) portant l'électrode d'émission (10) peut être balayé avec de l'air apporté.

3. Cyclone selon l'une des revendications 1 et 2, caractérisé par le fait qu'il est prévu un diaphragme (26) qui protège des particules un isolateur (11) portant l'électrode d'émission (10).

4. Cyclone selon l'une des revendications 1 à 3, caractérisé par le fait qu'au moins une partie de l'électrode d'émission (10) est placée dans la zone d'entrée (4).

5. Cyclone selon l'une des revendications 1 à 4, caractérisé par le fait qu'au moins une partie de l'électrode d'émission (10) est placée dans la zone de séparation (5).

6. Cyclone selon l'une des revendications 1 à 5, caractérisé par le fait que l'électrode d'émission (10) présente au moins un disque d'émission (12).

7. Cyclone selon l'une des revendications 1 à 6, caractérisé par le fait que l'électrode d'émission (10) présente un grand nombre de pointes d'émission (13).

8. Cyclone selon l'une des revendications 1 à 7, caractérisé par le fait que l'orifice de sortie du gaz épuré (9) est fait sur un tube plongeur (8) qui entre à l'intérieur (7) du corps (2).

9. Cyclone selon l'une des revendications 1 à 8, caractérisé par le fait que c'est un cyclone à inversion de flux dans lequel la zone d'entrée (4) et l'orifice de sortie du gaz épuré (9) sont placés du côté de l'entrée.

10. Cyclone selon l'une des revendication 1 à 9, caractérisé par le fait que c'est un cyclone à flux axial dans lequel la zone d'entrée (4) et l'orifice de sortie du gaz épuré (9) sont placés dans des zones d'extrémité opposées axialement du corps (2).

11. Cyclone selon l `une des revendications 9 et 10, caractérisé par le fait qu'au moins un isolateur (11) portant l'électrode d'émission (10) est fixé à la partie du corps (2) opposée dans la direction axiale de celui-ci à l'orifice de sortie du gaz épuré (9).

12. Cyclone selon les revendications 8 et 11, caractérisé par le fait que l'électrode d'émission (10) et le tube plongeur (8) entrent à l'intérieur (7) du corps à des extrémités opposées axialement de ce dernier.

13. Procédé de séparation continue de particules fines d'un courant de gaz, en particulier de la suie des gaz d'échappement des moteurs à combustion interne, au moyen d'effets d'écoulement dans un écoulement giratoire formé dans un cyclone, par lesquels les particules sont concentrées dans une zone de collecte de celles-ci (6), le cyclone comprenant un corps (2) qui renferme une zone d'entrée (4) dans laquelle débouche un orifice d'entrée (3), une zone de séparation (5) placée sur le chemin d'écoulement du gaz en aval de la zone d'entrée (4), et la zone de collecte des particules (6), placée sur le chemin d'écoulement des particules en aval de la zone de séparation (5), lequel cyclone présente un orifice de sortie du gaz épuré (9) qui débouche à l'intérieur (7) du corps (2) et une électrode d'émission (10) qui entre à l'intérieur (7) du corps (2) et à laquelle est appliquée une haute tension électrique, cyclone dans lequel l'électrode d'émission (10) est isolée électriquement de l'orifice de sortie du gaz épuré (9), l'orifice de sortie du gaz épuré (9) est relié électriquement au corps (2), et un isolateur (11) portant l'électrode d'émission (10) est fixé à l'intérieur du corps (2) à une certaine distance de l'orifice de sortie du gaz épuré (9),
caractérisé par le fait qu'il est conçu pour la séparation de particules conductrices fines de grosseur inférieure à 5 µm, en particulier inférieure à 1 µm, l'électrode d'émission (10) étant conçue de façon telle que les particules forment des agglomérats sous l'influence des forces du champ électrique de celle-ci, et l'isolateur (11) portant l'électrode étant placé dans un appendice (24) du corps dans lequel est formée une zone à faible écoulement.

14. Procédé selon la revendication 13, caractérisé par le fait qu'est utilisé un cyclone selon l'une des revendications 1 à 12.
